Europäisches Patentamt

European Patent Office

Office européen des brevets

(11) Publication number: **0 296 655 B1**

(12) **EUROPEAN PATENT SPECIFICATION**

(45) Date of publication of patent specification: **02.01.92**    (51) Int. Cl.⁵: **E21B 43/25**, E21B 33/138

(21) Application number: **88201131.5**

(22) Date of filing: **06.06.88**

(54) **High-temperature diverting agent system for the oil industry, and corresponding treatment process.**

(30) Priority: **23.06.87 FR 8708852**

(43) Date of publication of application:
**28.12.88 Bulletin 88/52**

(45) Publication of the grant of the patent:
**02.01.92 Bulletin 92/01**

(84) Designated Contracting States:
**DE GB IT NL**

(56) References cited:
**US-A- 3 724 549**

(73) Proprietor: **PUMPTECH N.V.**
**Atlantic House Noorderlaan 147 Bus 5C**
**B-2030 Antwerpen(BE)**

(72) Inventor: **Doerler, Nicole**
**10, Lotissement des Acacias**
**F-42340 Veauche(FR)**
Inventor: **Lietard, Olivier**
**34, Allée Bergson**
**F-42000 St-Etienne(FR)**
Inventor: **Piot, Bernard**
**18, Rue du 8 Mai 1945**
**F-42270 St-Priest-en-Jarez(FR)**

(74) Representative: **Richebourg, Michel**
**Dowell Schlumberger Z.I. Molina Chazotte**
**F-42000 Saint-Etienne(FR)**

Rank Xerox (UK) Business Services

## Description

This invention concerns the oil and related sectors, more particularly, the treatment of underground formations through which a wellbore passes (oil, water, gas, geothermal and similar).

We know that the oil and related industries routinely carry out matrix treatments to remedy the damage which reduces the permeability of the rock in the reservoir around the well and therefore reduces production to unacceptable levels.

Matrix treatments are often carried out in heterogeneous reservoirs and the injection of the treatment fluid is therefore not uniform, since the fluid will tend to pass through the more permeable areas or layers. The fluid thus tends to go to the least damaged areas, therefore considerably reducing the effectiveness of the treatment.
Various well-known techniques are used to remedy this difficult problem. There are the mechanical techniques ( packers and mechanical plugs) as well as various diverting agents, which are added to the treatment fluid or used in conjunction with it.

These diverting agents create a filtration cake of solid particles in front of the high-permeability areas towards which the fluid (s) tend to run first. The fluid flow is thus diverted towards the most heavily damaged areas. This is therefore a means of equalizing the fluid injections into the various areas.

The invention concerns this type of treatment whatever the technique used with these diverting agents. People skilled in the art refer to "techniques" either the "slug" technique where the diverting agent is introduced in only a fraction of the volume (called a slug) of the total treatment or the "continuous" technique where the material is used throughout the entire treatment fluid.

In the "continuous" technique, the diverting agent is added directly to the treating fluid (s), which are generally inorganic acids (hydrochloric, hydrofluoric, boric,fluoboric, phosphoric) or organic acids (formic, acetic, citric, lactic) or one of their salts or a combinaison of any of the above. The treating fluid may well be also, without limiting the scope of this patent,any fluid injected at matrix rates (without fracturing) into a permeable formation, whether this fluid has a curing (dissolution) or a prevention (inhibition) role, as known by people skilled in the art. In addition the treating fluids may include any other additives such as corrosion inhibitors, surfactants, demulsifiers, sludge preventors, scale inhibitors, parraffin inhibitors, mutual solvents, foaming agents, iron sequestring agents, iron reducing agents, ... as required by the treatment.

In the "slug" technique, the diverting agent can be added to a fraction of the treating fluid, as defined above, or it can be added to a different fluid which has for sole role to carry the diverting agent . This fluid is usually a weak (diluted) solution of a treating fluid (such as weak hydrochloric acid solution) or a brine. In this latter case, light ammonium chloride brine is often preferred when performing an acid treatment, whilst other brines, including hard ones like sea water, can be used when injecting other fluids.

In the rest of the patent, the term" treatment" fluid will be used indistinctly for referring to the fluid in which the diverting agent is suspended whether it is a portion of the treating fluid (generally a concentrated acid) or not, i.e. indifferently of the technique used.

One of the most difficult problem of this technique consists in that the diverting agents commonly used start to melt and fuse, in their treatment fluid, at a temperature not exceeding 100 °C (212 °F), although their softening points are given as being about 180 °C (360 °F) at atmospheric pressure as measured by ASTM E28.
One of the thorniest problems with this technique is the fact that current diverting agents melt in the treatment fluid (mainly any acid or mixture of acids HCL, HCL + HF, boric or borofluoric acid) at about 100°C (212 °F) although their softening point is generally higher than 180°C (356°F) at atmospheric pressure. For this reason, but also because there is incorrect dispersal of particles in the treatment fluid by a surfactant, treatment with diverting agents is often difficult, and even fails or is inadequate in many cases. The invention proposes a diverting agent system which withstands temperatures in acid of up to at least 180 °C (356 °F), has very good diverting agent dispersal properties in the fluid, leads to the formation of a cake of low permeability, itself with good mechanical strength, although it can be easily broken up and completely eliminated once production resumes.

Taken together, these properties are unique. The prior art can be illustrated by patent reference USP 3 319 716 (use of a hydrosoluble viscosity enhancing gum), by patent USP 3 724 549, as well as by patent USP 3 827 498, which introduces the notion of the mechanical behaviour of a cake and suggests using certain friable resins. The industry as a whole has gradually moved towards the use of commercial aliphatic resins which are totally soluble in oil and have a high softening point(180 °C, 356 °F) as measured using the ASTM E28 ring and ball technique at atmospheric pressure.
The applicant has shown that, paradoxically, the extremely good solubility of these resins in oil could constitute a drawback. This notion goes against accepted theory of the prior art, which aimed for maximum solubility in order to minimize the risk of damage to the formation by the diverting agent itself.

Above all, the applicant has shown that current systems poorly withstand temperatures above about 100 °C (212 °F) in real treatment conditions, which gave absolutely no indication as to the softening point of 180 °C (356 °F) mentioned earlier.

Indeed temperature, pressure, the treatment fluid (in particular acids or mixtures thereof) and - as the applicant has shown - conventional corrosion inhibitors (compulsory in an acid medium) have a highly prejudicial effect on the surfactant and the resin. Degradation of the surfactant results in agglomerations of particles and the formation of a loose cake which is too permeable and not strong enough.

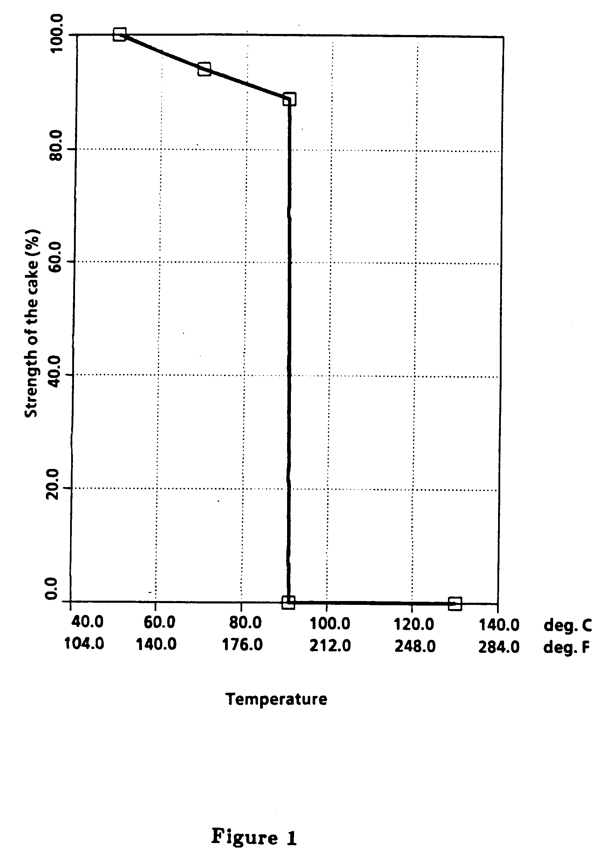

As for resin, its softening point falls off surprisingly at about 100 °C (212 °F) in real treatment conditions. A cake, either formed above this temperature, or below it but then raised to more than 100 °C (212 °F) by heating through contact with the formation, has extremely large pores and thus excessively high permeability. In addition, its mechanical strength falls considerably and the cake is eliminated prematurely. This is illustrated by Fig.1 appended : at about 90 °C (194 °F) in HCL + conventional corrosion inhibitor such as phenylketone, the mechanical strength of the cake crumbles.

The invention concerns a diverting agent system comprising the combination i) of a polycyclic resin of the poly (cyclopentadiene) and/or poly (methylcyclopentadiene) type partially soluble in oil and ii) a specific dispersant conisting of a nonionic surfactant, with a polyethoxylated a saturated linear chain, comprising at least 16 carbon atoms and preferably at least 18, and with an HLB (hydrophile-lipophile balance) of between 10 and 20, and preferably of 15.

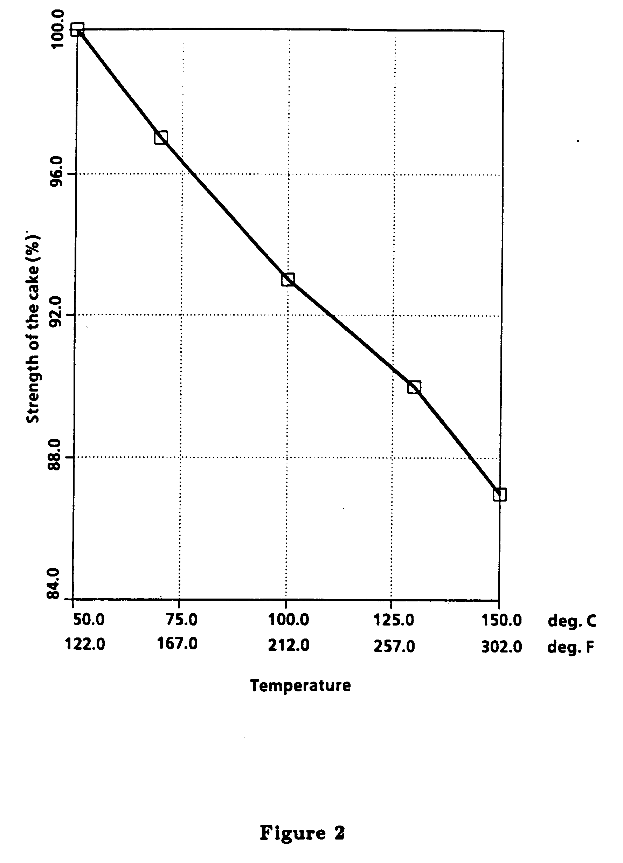

Figure 2 appended shows that the mechanical strength of the cake formed with the system :
- resin: poly (methyl) cyclopentadiene/polycylopentadiene
- surfactant : polyethoxylated stearyl alcohol up to an HLB of 15 (20 moles of ethylene oxide)

only decreases very slowly with temperature (still 87% at 150 °C - 302 °F). At 170 °C (338 °F), the diverting agent according to the invention is still highly effective.

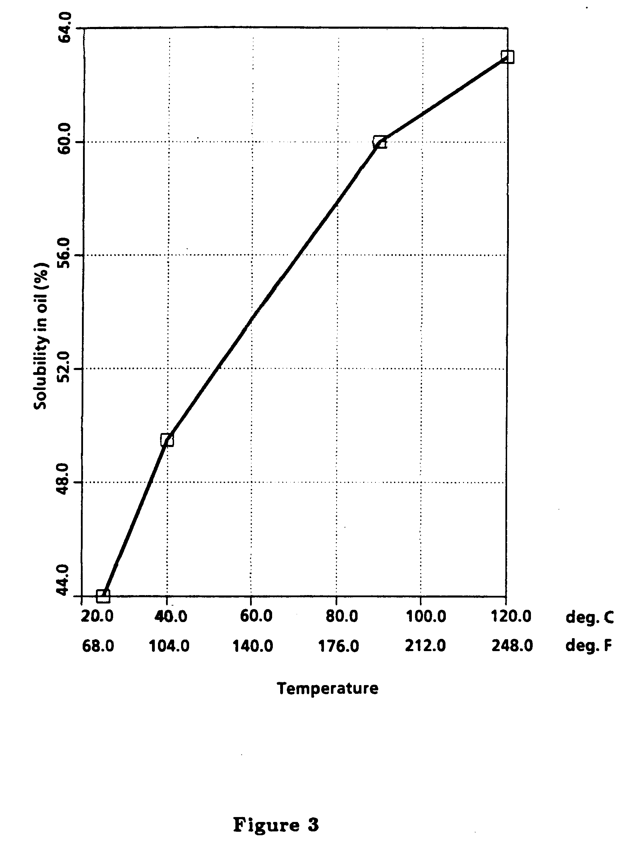

The above mentioned resins are partially soluble in oil (see figure 3 appended). Their solubility in oil is preferably at least equal to 40% at ambient temperature and 65% at 150 °C (302 °F). They have a softening point, defined as per ASTM E28, of between 150 °C and 250 °C (302 °F to 482 °F), and preferably between 160 °C (320 °F) and 205 °C (401 °F). These resins form a cake which, although very strong during the treatment, is broken up and easily eliminated by simple inverse flow of any fluid.

Fig. 4 appended represents the head loss in the cake obtained with the above resin/surfactant system :
- 18 kg of resin/m$^3$ of treatment fluid,
- 0,5 % of surfactant by weight of the processing fluid,
- velocity of the treatment fluid through the filtration surface : 7,5 x 10$^{-4}$ m.s$^{-1}$,
- cake formation temperature 90 °C (194 °F).

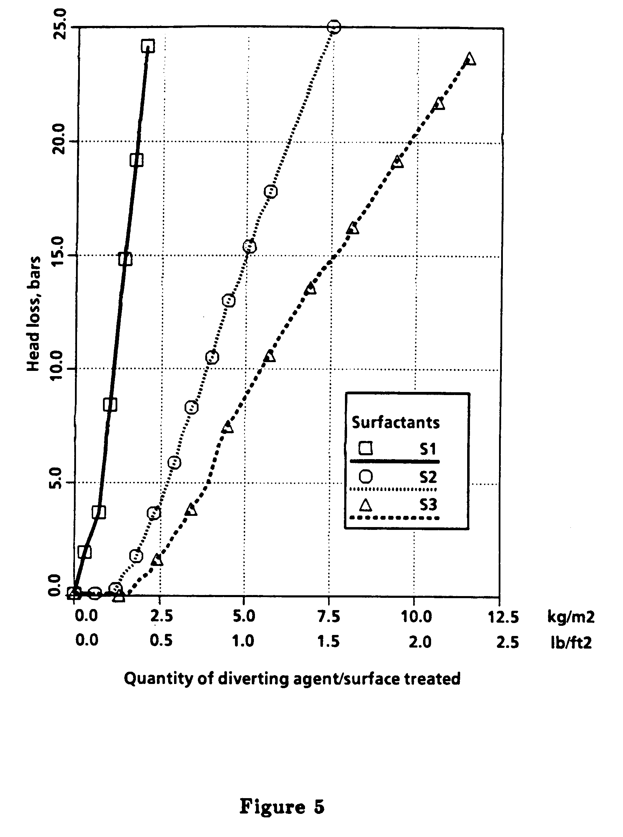

Fig. 5 appended represents the head loss obtained for various nonionic surfactants :
- S1: polyethoxylated stearyl alcohol (20 moles of ethylene oxide)
  HLB = 15
- S2: ethoxylated nonyl phenol
  HLB = 15
- S3: polyethoxylated lauryl alcohol
  HLB = 16.9
  (same operating conditions as for Fig.4).

Product S1 is far superior.

The resin will be placed in suspension in the treatment fluid in concentrations of between 0.10 kg/m$^3$ and 70 kg/m$^3$ inclusive, depending on the application conditions. More particularly, and in order to limit the volumes of fluids used and efficiently clog the formation to be treated, it will be preferable, according to the invention, to use concentrations of resin/m$^3$ of treatment fluid of between 0,5 and 30 kg/m$^3$, and dispersant concentrations of between 0,2 and 1% by weight of treatment fluid.

A comparative test was conducted with a diverting agent representative of the resins used in the prior art, and the diverting agent system according to the invention.

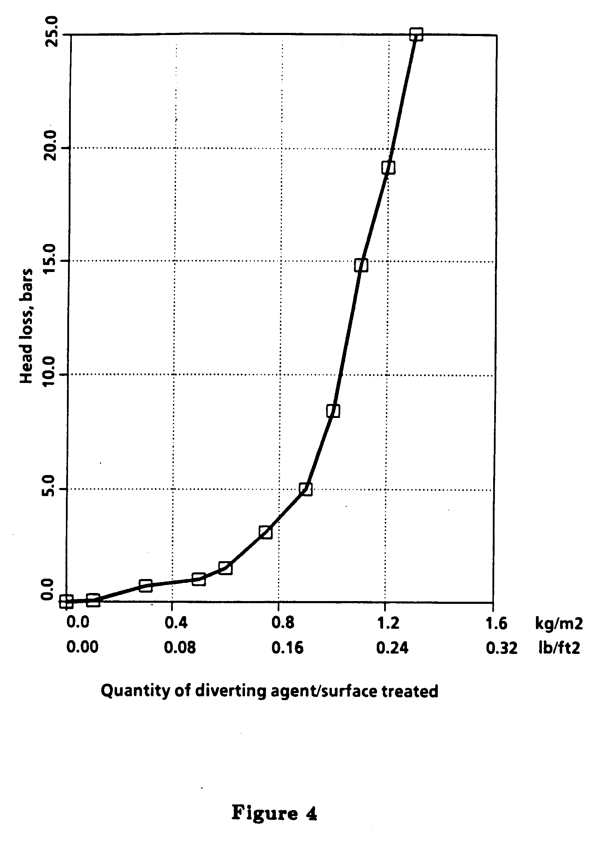

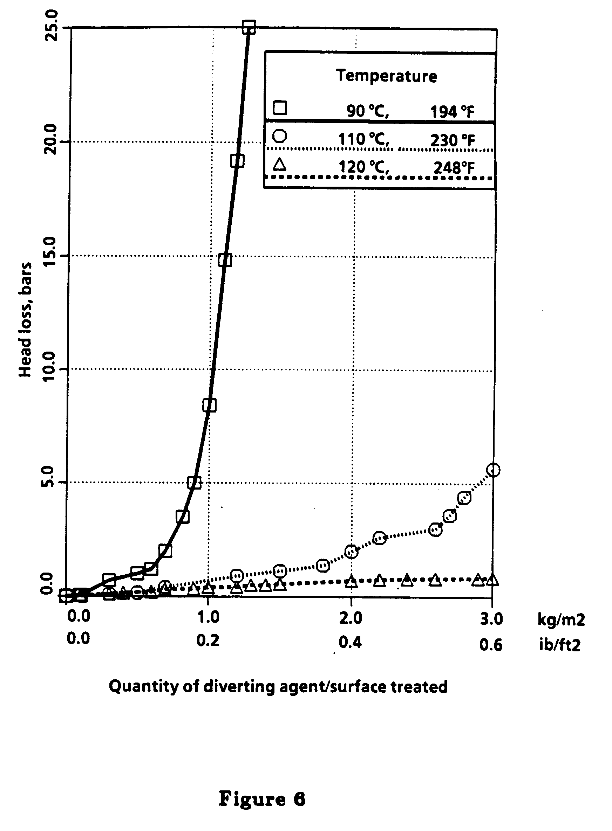

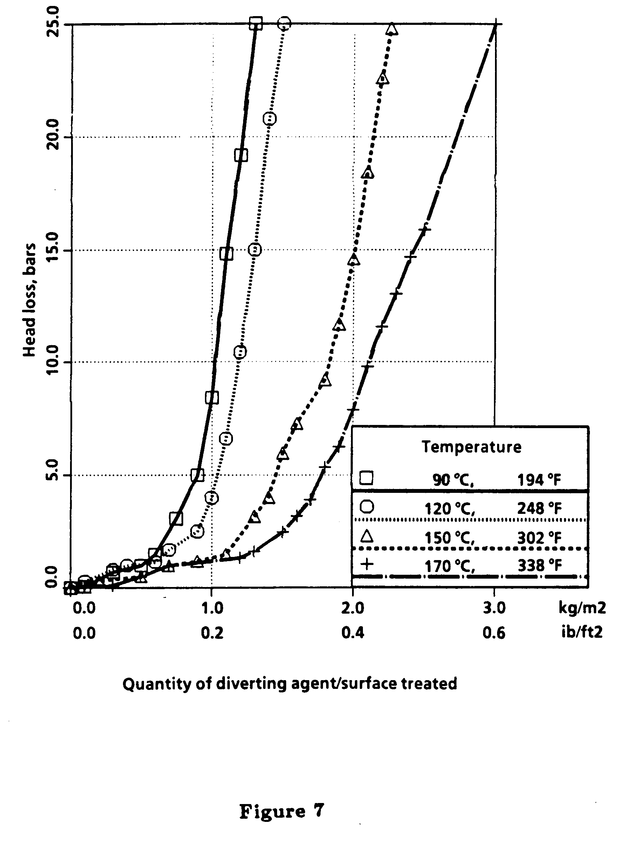

The same conditions as in fig.4 were used, but with a variation in the temperature. The results are shown in figs.6 and 7 appended. The results given in fig.6 were obtained with systems used in the prior art. The efficiency of this system is zero at 110 °C (230 °F). Fig. 7 shows that the temperature resistance of the system according to the invention is incomparably better. All the tests described above were run in a diverting simulator. In all cases, the core sample was limestone with a permeability of 100 mDARCY. This core sample was placed in a measurement chamber capable of reproducing the pressure and temperature conditions at the bottom of a well.

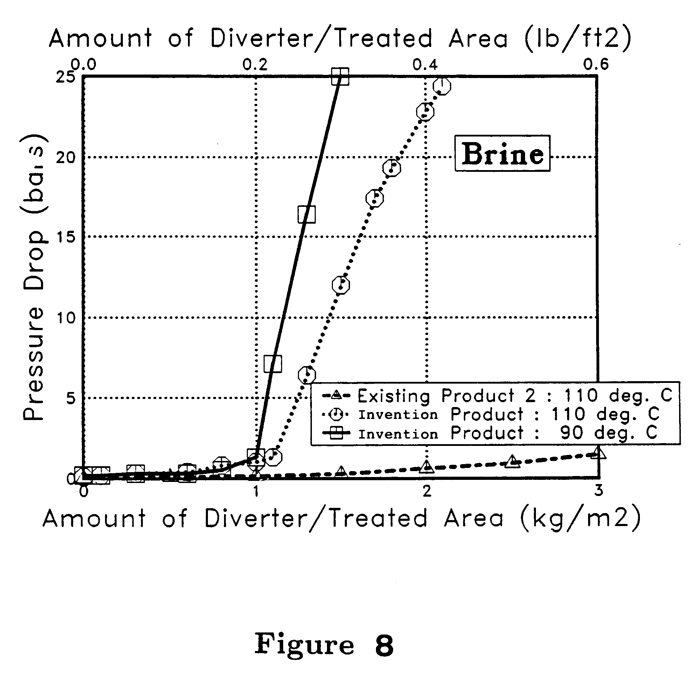

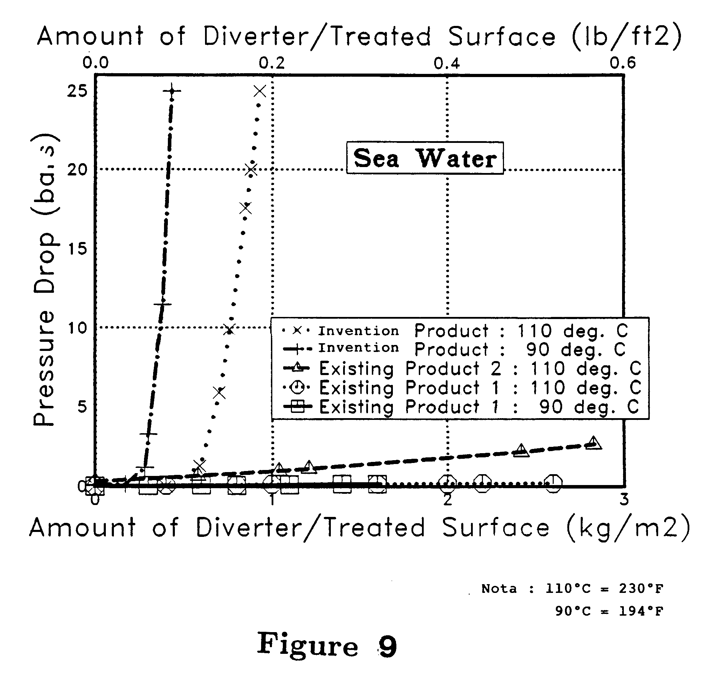

The treatment fluid containing the diverting agent was injected at constant flowrate through the already saturated core sample. During the test, the head losses through the diverting agent cake and through the "cake plus core sample" assembly were measured. This twin measurement is used to check any penetration of the porous medium by the diverting agent. The comparative tests between a diverting agent representative of the prior art and the diverting system according to the invention were conducted with agents having the same grain size, such that the resin grains would not pass through the limestone core sample. To be noted that the resin particles can also be properly dispersed in different treatment or carrying fluids such as : brines, sea water, up to at least 180 °C (356 °F). Tests were performed using different carrying fluids, and especially non reactive fluids such as brine and sea-water. In both fluids, it has been shown that existing diverting agents were unefficient. Results of these tests are respectively reported on figures 8 and 9.

Comparative examples are shown between the resin diverting system described in prior art and the resin diverting system of this invention at high temperatures (90 and 110 °C) (194 and 230 °F) in different brines (sea water for figure 8 and a 3% ammonium chloride brine solution in figure 9.

In both cases, the system of the present invention ("Invention Product") offers much improved performance over the conventional resin diverting system.

**Using sea water** commercially available resin has been dispersed using two different surfactants :
- . Ethoxylated fatty acid (C12), coded Product 1 on figure 8,
- . a blend of non-ionic and anionic surfactants (ethoxylated butyl phenol and dodecylbenzene sulfonate), coded Product 2 on figure 8,

both show very low performances whereas the system of the present invention is efficient at 90 as at 110 °C.

**Using a brine**, $NH_4Cl$, commercially available resin has been dispersed using the blend of surfactants previously described. Results presented on figure 9, exhibit the superiority of the invention when a brine is used as carrying fluid.

## Claims

1. A diverting agent system for clogging underground zones of high permeability, through which a wellbore passes, wherein it comprises a combination:

   - of a polycyclic resin of the poly (cyclopentadiene) and/or poly (methylcyclopentadiene) type, partially soluble in oil, and:
   - a dispersant consisting of a nonionic surfactant with an ethoxylated, saturated linear chain, comprising at least 16 and preferably 18 carbon atoms, and with an HLB of 10-20, and preferably 15.

2. A diverting agent system as claimed in claim 1, wherein the solubility of the resin in oil is at least 40% at ambient temperature and at least 65% at 150 °C (320 °F).

3. A diverting agent system as claimed in claims 1 or 2, wherein the dispersant is an ethoxylated stearyl alcohol with an HLB of up to 15.

4. A diverting agent system as claimed in claims 1 or 2, wherein the dispersant is an ethoxylated nonylphenol with an HLB of 15, or an polyethoxylated lauryl alcohol with an HLB of 16.9.

5. A diverting agent system as claimed in any of claims 1 to 4, wherein comprises:

   - 0.1 to 70 kg of resin/$m^3$ of treatment fluid, preferably 0.5 to 30 kg/$m^3$ of treatment fluid,
   - 0.2 to 1% of dispersant by weight of the treatment fluid.

6. Oil industry treatment fluids, in particular treatment fluids such as brines, sea water, or acidification fluids comprising a corrosion inhibitor, wherein they contain a diverting agent system as claimed in any of claims 1 to 5.

7. A treatment process for permeable underground formations through which a wellbore passes, wherein at least one treatment fluid as claimed in claim 6 is injected, and/or wherein, separately from the treatment fluid proper, a diverting agent system is injected as claimed in any of claims 1 to 5.

## Revendications

1. Un ensemble d'agents de déviation destiné à colmater des zones souterraines à haute perméabilité que traverse un forage de puits, comprenant :
   - une résine polycyclique du genre du poly(cyclopentadiène) et/ou du poly-(méthylcyclopentadiène), partiellement soluble dans les huiles de pétrole, et :
   - un agent dispersant consistant en un surfactif non-ionique à chaine linéaire saturée éthoxylée ayant au moins 16 et de préférence 18 atomes de carbone, de HLB (indice d'amphipathie) de 10 à 20 et de préférence de 15.

2. Ensemble selon la revendication 1, caratérisé en ce que la solubilité de la résine dans l'huile est d'au moins 40 % à la température ambiante et d'au moins 65 % à la température de 150 °C.

3. Ensemble selon la revendication 1 ou 2 dont l'agent dispersant est un alcool stéarylique éthoxylé ayant un HLB s'élevant jusqu'à la valeur 15.

4. Ensemble selon la revendication 1 ou 2 dont l'agent dispersant est un monylphénol éthoxylé de HLB 15 ou un alcool laurylique polyéthoxylé de HLB 16,9.

5. Ensemble selon l'une quelconque des revendications 1 à 4, comprenant :
   - de 0,1 à 70 kg de la résine par m³ du liquide de traitement, de préférence de 0,5 à 30 kg/m³, et
   - de 0,2 à 1 % du dispersant par rapport au poids du liquide de traitement.

6. Liquides de traitement pour l'indusrie pétrolière, en particulier tels que saumures, eau de mer ou liquides d'acidification comprenant un inhibiteur de corrosion, qui contiennent un ensemble d'agents de déviation selon l'une quelconque des revendications 1 à 5.

7. Un procédé de traitement de formations souterraines perméables que traverse un forage de puits, dans lequel on injecte un ou plusieurs liquides de traitement selon la revendication 6 et/ou dans lequel on injecte, séparément du liquide de traitement lui-même, un ensemble d'agents de déviation selon l'une quelconque des revendications 1 à 5.

**Patentansprüche**

1. Umleitungsmittelsystem zum Verstopfen von unterirdischen Bereichen mit hoher Permeabilität, durch die ein Bohrloch führt und das eine Kombination enthält von:

   - einem polycyclischem Harz des Poly-(cyclopentadien)- und/oder Poly-(methylcylcopentadien)-Typs, teilweise in Öl löslich, und:
   - einem Dispergiermittel, das aus einem nichtionischen oberflächenaktiven Mittel mit einer ethoxylierten, gesättigten, geraden Kette, die mindestens 16 und vorzugsweise 18 Kohlenstoffatome enthält, und einem Hydrophilie-Lipophilie-Gleichgewicht (HLB) von 10-20 und vorzugsweise 15 besteht.

2. Umleitungsmittelsystem nach Anspruch 1, worin die Löslichkeit des Harzes in Öl bei Umgebungstemperatur mindestens 40% und bei 150 °C (320 °F) mindestens 65% ist.

3. Umleitungsmittelsystem nach Anspruch 1 oder 2, worin das Dispergiermittel ein ethoxylierter Stearylalkohol mit einem HLB bis 15 ist.

4. Umleitungsmittelsystem nach Anspruch 1 oder 2, worin das Dispergiermittel ein ethoxyliertes Nonylphenol mit einem HLB von 15 oder ein polyethoxylierter Laurylalkohol mit einem HLB von 16,9 ist.

5. Umleitungsmittelsystem nach einem der Ansprüche 1 bis 4, enthaltend:

   - 0,1 bis 70 kg Harz/m³ Behandlungsflüssigkeit, vorzugsweise 0,5 bis 30 kg Harz/m³ Behandlungsflüssigkeit,
   - 0,2 bis 1% Dispergiermittel bezogen auf das Gewicht der Behandlungsflüssigkeit.

6. Behandlungsflüssigkeiten für die Erdölindustrie, insbesondere Behandlungsflüssigkeiten wie etwa Salzlaugen, Meerwasser oder Ansäuerungsflüssigkeiten, die einen Korrosionshemmstoff enthalten, **dadurch gekennzeichnet,** daß sie ein Umleitungsmittelsystem nach einem der Ansprüche 1 bis 5 enthalten.

7. Behandlungsverfahren für permeable unterirdische Formationen, durch die ein Bohrloch verläuft, in die mindestens eine Behandlungsflüssigkeit nach Anspruch 6 eingespritzt wird und/oder ein Umleitungsmittelsystem nach einem der Ansprüche 1 bis 5 getrennt von der eigentlichen Behandlungsflüssigkeit eingespritzt wird.

**Figure 1**

Figure 2

**Figure 3**

**Figure 4**

Figure 5

**Figure 6**

Figure 7

**Figure 8**

Figure 9